# EUROPEAN PATENT APPLICATION

(11) **EP 2 472 483 A1**
(43) Date of publication of application: **04.07.2012**
(21) Application number: 11190271.4
(22) Date of filing: 23.11.2011
(51) Int. Cl.: G07F 17/12, G06Q 20/32, G07F 17/10

(54) **Bicycle rental system**

(30) Priority: 30.12.2010 DK 201001196
(71) Applicant: AFA JCDecaux A/S, 2650 Hvidovre (DK)
(72) Inventor: Axelsen, Kim Fajstrup, 8260 Viby J. (DK)
(74) Representative: Roerboel, Leif

(57) **Abstract**

The invention pertains to a bicycle rental system comprising: A bicycle storage station comprising a plurality of bicycle stands for supporting and locking bicycles, each bicycle stand comprising a lock configured to open at the receipt of a command signal, a portable communication device configured for sending a control message representing a specific bicycle stand of the plurality of bicycle stands and said portable communication device, and a central computer. The central computer comprises a registry with stored registration data representing said specific bicycle stand and said portable communication device, the central computer being configured for: receiving said control message, comparing said control message with said stored registration data for identifying said portable communication device, and subsequently sending a command signal to said specific bicycle stand for unlocking said specific stand.

## Description

### TECHNICAL FIELD

The present invention pertains to a bicycle rental system.

### BACKGROUND OF THE INVENTION

In many larger cities a number of so called "city bike" systems have been implemented in order to provide an alternative mode of transportation to taking a bus, a metro or the like.

These known systems usually comprise a plurality of bicycle storage stations, each being equipped with a plurality of bicycles. Such a system has for example been implemented in Copenhagen, Denmark, wherein a user can gain access to a bicycle by paying a certain amount in a coin operated machine assigned to the bicycle storage station. When the user then returns his bicycle to the same storage station, or to another of the plurality of storage stations, he will get his money back when locking the bicycle to the storage station. The system is therefore free to use. The upkeep and maintenance of the system, including the bicycles, are paid for by sponsors and public funding.

Another similar system is for example known from US 5,841,351, which has many similarities with the Copenhagen city bike system. However, the system known from US 5,841,351 is a commercial system, wherein the users have to pay for the renting of the bicycles. Each user of the system will have a smart card assigned to him, and he will have to use this smart card in order to unlock a bicycle at a storage station and use it. Each storage station is linked to a computer, which performs bicycle and user identity checks when a user is renting and returning a bicycle (to any of the storage stations). The above mentioned system has the disadvantage that the user is dependent on remembering his smart card if he wants to rent a bicycle. Furthermore, if the need to rent a bicycle emerges at a time or day where the user has not planned to rent a bicycle, he may not have brought the smart card with him and will therefore be unable to rent a bicycle belonging to this system without having to buy another smart card.

In EP 1 281 588 is disclosed a method for transmission of an opening code, wherein an identification entered via a mobile radio network terminal is received by a server for authentication before transmission of an opening code back to the mobile radio network terminal, at which it is displayed to allow it to be entered in the coded lock securing a bicycle. Also disclosed is a method for transmission of a closure code for a coded lock, a terminal with a mobile radio interface and a control unit and a server provided with a control unit. A similar system is disclosed in EP 122 193.

In US 2010/0245128 is disclosed a bicycle rental system comprising indicator means for displaying whether the bicycle stand is locked.

In US 2002/0174077 is disclosed a bicycle rental system, wherein each of the bicycles is equipped with a GPS for detecting its current position, and wherein the system further comprises means for allowing the user to localize a particular bicycle within the system by use of a mobile phone.

In EP 2 261 108 is disclosed a municipal bicycle sharing system, wherein a user can obtain the code for the coded lock of a bicycle via his mobile phone and use it to unlock the bicycle.

In WO 2005/101331 is disclosed a bicycle rental system, wherein a user can send a message from his mobile telephone via a short range protocol to a bicycle stand, wherefrom it is forwarded to the central computer.

Other related systems are for example known from WO 03/071493, US 2010/0280700, US 2007/0239465, US 2010/0228405, and EP 1 390 922.

However, it is disadvantageous with systems which require the use of coins, smart cards or codes, because if a user fails to remember to bring coins or his smart card with him, he will not be able to rent a bicycle. Coded locks overcome these disadvantages, but these may be cumbersome to use, especially if the user has to wait in order to receive the code before use. These disadvantages are even more pronounced if the same user needs to use a rental bicycle on a regular basis, e.g. every day for a certain period of time.

### SUMMARY OF THE INVENTION

It is thus an object of the present invention to provide a method of using a bicycle rental system which overcomes the disadvantages mentioned above.

The above mentioned and further objects are achieved by a first aspect of the invention pertaining to a bicycle rental system comprising:
a bicycle storage station comprising a plurality of bicycle stands for supporting and locking bicycles, each bicycle stand comprising a lock configured to open at the receipt of a command signal,
a portable communication device configured for sending a control message representing a specific bicycle stand of the plurality of bicycle stands as well as representing said portable communication device itself, and
a central computer comprising a registry with stored registration data representing said specific bicycle stand and said portable communication device, the central computer being configured for:
   receiving said control message,
   comparing said control message with said stored registration data for identifying said portable communication device, and subsequently
   sending a command signal to said specific bicycle stand for unlocking said specific stand.

Hereby is achieved a very user friendly bicycle rental system, wherein there is no need for operating a coded lock in order to unlock the bicycle or to use smartcards or coins. By registration of one of the user's portable communication devices, said device will be linked to a specific bicycle and bicycle stand in the registry of the central computer. Thus, this bicycle rental system is particularly developed as a commuting bicycle system, wherein people need a bicycle for a longer period of time. Thus, the user will always know that the bicycle he/she has rented will be available for him/her and that it's associated bicycle stand is available, when he/she returns the bicycle after use. The invention is in some way based on the fact that most - if not all - people always or substantially always carry a portable communication device with them, such as for example a mobile phone, and that such a portable communication device can conveniently be used to unlock the rental bicycle. In those alternative systems, which are known in the art, a user needs to use a smart card or coins. Such a smart card needs to be delivered to said user, e.g. through a post delivery system, by a smart card provider. According to the present invention the user merely needs to register his portable communication device (and preferably pay for a subscription), where after the rental bicycle is readily available for him to use. Furthermore, the present system provides for a very easy and convenient way of unlocking the rented bicycle for use, because it may be done by a simple sending of e.g. a simple text message or a call to a designated number, which conveniently may be stored on the user's portable communication device if intended for frequent use. This is a tremendous advantage, because in a typical use situation a user would be in a hurry, and he/she needs to unlock the rental bike very quickly after he/she for example leaves a train or a metro. There is in accordance with the present invention no need to wait for the receipt of an opening code and to apply such an opening code in order to open the lock of the bicycle.

In a preferred embodiment of the bicycle rental system according to the first aspect of the invention, the registration data in the registry are obtained by an online internet based user registration of a portable communication device via a web page. The portable communication device is preferably a mobile phone, an I-phone or any similar device. The user registration of the portable communication device may be associated with his/her phone number or SIM-card. Hereby is achieved a system, wherein the user of the portable communication device is linked to a specific bicycle and specific bicycle stand, and wherein there is no need to wait for a post delivery of a smart card or the like.

In a preferred embodiment of the bicycle rental system according to the first aspect of the invention the above mentioned webpage is configured for displaying a plurality of subscription possibilities and for subsequently providing secure means for performing an online monetary transaction in order to pay for a subscription. Hereby is achieved a very convenient way in which a user can rent a bicycle and chose a subscription (for example set the period in which the rental bike is needed), which suits his/her needs and pay for the service online. Alternatively, the payment could be performed over the phone bill in case the portable communication device is a mobile phone.

In a preferred embodiment of the bicycle rental system according to the first aspect of the invention the webpage is further configured for displaying the location of a plurality of bicycle storage stations on a map, and the number of available bicycles at the each bicycle storage station. This gives the user the possibility to choose the bicycle storage station, which is most convenient foe him/her to use. Preferably, the bicycle storage stations are placed in the vicinity of train stations and/or metro stations and/or bus stations. Hereby for example a train can be used to transport the user from A to B, and the rental bicycle can be used to transport the user from B to the work place of the user.

In a preferred embodiment of the bicycle rental system according to the first aspect of the invention the webpage is configured to display an identification tag identifying a specific vacant bicycle and bicycle stand.

In a preferred embodiment of the bicycle rental system according to the first aspect of the invention portable communication device is a mobile phone, and wherein the control message is a short message service (SMS), which is sent via a mobile phone communication system. Hereby a very practically convenient way of unlocking the bicycle is achieved.

In a preferred embodiment of the bicycle rental system according to the first aspect of the invention the command signal is sent to the specific bicycle stand via a mobile phone communication system. Hereby a very convenient way of sending a command signal from the central computer to the bicycle stand is achieved.

In a preferred embodiment of the bicycle rental system according to the first aspect of the invention the bicycle stand comprises indicator means for indicating whether it is locked or unlocked.

In a preferred embodiment of the bicycle rental system according to the first aspect of the invention each bicycle stand comprises means for automatically locking its lock subsequent to a removal of a bicycle from it. Hereby is achieved that the bicycle stand cannot be used by other persons, and that it will stay vacant until the specific bicycle belonging to it is returned.

In an embodiment of the bicycle rental system according to the first aspect of the invention each bicycle is furthermore equipped with a separate coded lock, for locking the bicycle at other locations than the bicycle stand during use.

In an alternative embodiment of the bicycle rental system according to the first aspect of the invention the portable communication device is configured for sending the control message via a short range wireless protocol to the bicycle storage station, and wherein the bicycle storage station comprises means configured for forwarding said control message to the central computer.

In a preferred embodiment of the bicycle rental system according to the first aspect of the invention the lock of the bicycle stand comprises means configured for engaging a corresponding locking bracket of a bicycle in order to lock the bicycle to the bicycle stand, and in a preferred embodiment of the bicycle rental system according to the first aspect of the invention each locking bracket is equipped with a radio-frequency identification tag readable by a bicycle stand, whereby each of the bicycle stands are able to identify the particular bicycle belonging to said bicycle stand. Hereby is achieved a very practical locking arrangement, wherein the specific bicycle stand is able to recognize the specific bicycle belonging to it, and automatically activate the means for locking the bicycle to the bicycle stand only if it is the bicycle with the "correct" locking bracket, which is inserted into the lock of the bicycle stand.

In a preferred embodiment of the bicycle rental system according to the first aspect of the invention, the bicycle storage station further comprising an advertising stand with a surface area adapted for receiving advertisements. Hereby is achieved a system, wherein revenue from advertisement, can aid in funding the bicycle rental system.

The above mentioned and further objects are achieved by a second aspect of the invention pertaining to a method of using a bicycle rental system comprising a bicycle storage station with a plurality of bicycle stands, the method comprising steps of:
- performing an online internet based user registration wherein a bicycle stand identification tag is issued,
- sending a text message, comprising the bicycle stand identification tag via a phone communication system to a central computer, where after the computer performs a user identification check, and sends a control signal to the bicycle stand unlocking the bicycle stand if the user identification check is approved,
- removing the bicycle from the bicycle stand for use,
- automatically locking the bicycle stand, after removal of the bicycle from it,
- returning the bicycle to the bicycle stand after use,
- unlocking the bicycle stand,
- placing the bicycle in the bicycle stand, and subsequently
- automatically locking the bicycle stand.

According to the present invention, the above-mentioned and other objects are fulfilled by a third aspect of the invention pertaining to a method of using a bicycle rental system comprising a bicycle storage station with a plurality of bicycle stands, the method comprising steps of:
- performing an online internet based user registration wherein a bicycle stand identification tag is issued,
- sending a text message, comprising the bicycle stand identification tag via a phone communication system to a central computer, where after the computer performs a user identification check, and sends a control signal to the bicycle stand unlocking the bicycle stand if the user identification check is approved, and
- removing the bicycle from the bicycle stand for use.

The bicycle stand identification tag is a tag that enables the user to identify the stand and bicycle that he has rented, and may for example be a number. For example each of the plurality of bicycle stands in a bicycle storage station may be equipped with such an individual tag. By performing an online registration, the user will immediately be informed whether a bicycle is available for his intended use. Thus, after performing the online registration, the user can go to the bicycle storage station and locate the bicycle stand that corresponds to the bicycle stand identification tag that has been issued to him/her. This identification tag could for example be shown to him/her on the computer screen when the registration is performed and/or be e-mailed and/or sent as an SMS message to him/her subsequently to the registration. When the specific bicycle stand has been located, the user simply has to send a text message comprising the bicycle stand identification tag via a phone communication system to a central computer in order to unlock the bicycle stand. The computer performs a user identification check, and sends a control signal to the bicycle stand unlocking the bicycle stand if the user identification check is approved. When the bicycle stand has been unlocked, the bicycle can be removed from the stand and is ready for use.

Throughout the present description the "user" is referred to as "he" or "he/her". However, it is understood that when referring to the user as "he" this does not exclude that the user could be of the opposite gender. Generally the user is thought of as being of any gender, man or woman, boy or girl, no matter what specific gender is mentioned in any specific context of the present description.

The method may according to an embodiment of the third aspect further comprise the steps of
- returning the bicycle to the bicycle stand after use,
- sending a text message comprising the bicycle stand identification tag via a phone communication system to a central computer, where after the computer performs a user identification check, and sends a control signal to the bicycle stand unlocking the bicycle stand if the user identification check is approved,
- placing the bicycle in the bicycle stand, and subsequently
- automatically locking the bicycle stand.

Hereby is achieved a method that is advantageous when the rental bicycle is used as a commuting bicycle. Preferably, the bicycle storage station is placed in conjunction with or in the immediate proximity of a train, metro or bus station. So if the user uses this kind of transportation (train, metro or bus) from destination A to destination B, and that then takes the rental bicycle from destination B to destination C, then when the user needs to travel back to destination A, he will can take the rental bicycle back to destination B and leave the bicycle where he picked it up, and then the train, metro or bus back to destination A. For example the destination could be a train, metro or bus station in the proximity of the user's home, and destination B could be a train, metro or bus station in closer to the user's work place, and destination C could be the user's work place. Since, the user needs to go to work every day (except for vacation and occasional holydays) it would be advantageous for him to use such a rental bicycle on an everyday basis as one of the means for transportation to his working place. For this kind of regular use of the rental bicycle as part of the commuting between the user's home and working place, the inventive method is advantageous, in that the bicycle or bicycle stand will always be ready for the user, when he needs it. Of cause it is understood that the user can use a regular lock, e.g. a so called chain lock, for locking the rental bicycle, while it is placed at destination C.

Preferably, the text message to the central computer is a short message service (SMS), which is sent by a mobile phone and the phone communication system is a mobile phone communication system and wherein the control signal to the bicycle stand is sent via a mobile communication system. Preferably, when performing the registration, the user associates a mobile phone to rental of the bicycle, whereby the user identification check performed by the central computer can be a simple check of the so called SIM card (or other identification or security information management means associated with a phone or phone number), which a mobile phone is equipped with.

In a preferred embodiment according to the third aspect of the invention, the method may further comprise the step of automatically locking the bicycle stand, after removal of the bicycle from it. Hereby is achieved that the bicycle stand is available again for the user when he needs to return the bicycle to it.

Preferably, the bicycle stand comprises indicator means for indicating whether it is locked or unlocked. These indicator means are preferably some kind of optical means such as a for example a green light for indicating that the bicycle stand is unlocked, and a red light for indicating that the bicycle stand is locked.

Preferably, the step of performing the online registration comprises the sub steps of
- choosing a subscription among a plurality of subscription possibilities, and
- performing an online transaction in order to pay for the subscription.

The subscription possibilities could for example be: a one week subscription, a one month subscription, or a three month subscription. Associated to each subscription possibility there may be displayed a price on a computer monitor. As an alternative to a number of default subscription possibilities, there could also be provided the possibility for the user to specifically define the time interval he needs the rental bicycle, where after a price is calculated and presented to the user. The online transaction could be credit card based.

When performing the online registration, the user preferably is requested to associate a mobile phone number to his subscription, and for security reasons the central computer may send a SMS message to that particular mobile phone number in order to have the user to confirm the subscription, by sending a return message to the computer. Alternatively, the SMS message could contain a security code, which the user needs to use in order to finalize the subscription.

Most modern mobile phones, e.g. I-phones, are equipped with a GPS receiver that to a certain degree enables the user to determine his position. Thus, the method may according to an embodiment further comprise the steps of using the GPS receiver of a mobile phone to locate the bicycle stand having the issued identification tag. For example the user could also use such a phone application to locate the bicycle storage station(s) that is most convenient for him to use, when for example commuting to and from his working place.

Often a user will need to use a bicycle to go from for example his home to destination A, or if for example the user needs to change trains at different train stations, it would be an advantage to be able to use the rental bicycle to go from one station to the next. Thus, in a preferred embodiment of the second or third aspect of the invention, the method may further comprise the steps of choosing one or more bicycle storage stations during the online registration and issuing a bicycle stand identification tag for each of the one or more bicycle storage stations.

Preferably the user can use a separate lock when placing the rented bicycle at a third location, for example in proximity of his work place, in order to preclude theft of it. However, the bicycle may furthermore be equipped with a separate coded lock, for locking the bicycle at other locations than the bicycle stand during use, and the method may according to another embodiment further comprise the step of issuing one or more codes for the separate coded lock of the bicycle. This coded lock could for example be a digitalized lock that is re-coded every time the user places the bicycle back into the bicycle stand, and the user may therefore receive a SMS message with a new code every time he removes the bicycle from the bicycle stand.

In one embodiment of the second or third aspect, the step of sending a text message comprising the bicycle stand identification tag via a phone communication system to a central computer may comprise the sub steps of:
- sending a text message comprising the bicycle stand identification tag to the bicycle stand via a short range wireless protocol, wherefrom the text message is forwarded to a central computer. The short range wireless protocol could for example be a Blue Tooth protocol or the like. Hereby is achieved that the user is unable to unlock the bicycle stand by mistake, when he is located at a different location than in the proximity of the bicycle stand.

Preferably, the codes for the coded lock (if the bicycle is equipped with such a lock) are issued during registration, or sent to the user via a mobile phone communication network as a SMS message to the user.

According to a forth aspect the invention pertains to a system comprising at least one, preferably a plurality, of bicycle storage stations, wherein each bicycle storage station comprises a plurality of bicycle stands for accommodating one bicycle. The bicycle storage stations are linked to a central computer via a communication link, e.g. a cable and/or a mobile phone communication network. The system according to the forth aspect also comprises a software program, which when run on a computer is configured to: present a number of subscription possibilities to a user, and upon a subscription request from a user is configured to enable the performance of a payment transaction, such as credit card verification. The presentation of the subscription possibilities is preferably enabled by a window in a computer monitor. The software program is also configured for requesting personal information about the user, such as for example name and address. Furthermore, the program enables the user to associate a mobile phone to the subscription by being requested to fill in a mobile phone number during the registration. The software program then issues a bicycle stand identification tag, which is preferably a number. This identification tag is then shown on the computer screen and/or sent to the user's mobile phone. The mobile phone and issued identification tag of the bicycle stand are thereby associated with the subscription that has been ordered by the user. The system is furthermore configured for unlocking the bicycle stand upon receipt of a SMS message, which includes the issued bicycle stand identification tag, from the associated phone. The system performs a user identification check before unlocking the bicycle stand. The actual unlocking of the bicycle stand is preferably performed automatically after the user identification check by sending a control signal from the central computer to the particular bicycle stand.

According to an embodiment of the first aspect of the invention any single feature or combination of features of the forth aspect of the invention can be combined with an embodiment of the first aspect of the invention in so far said features are not explicitly incompatible with said embodiment of the first aspect of the invention.

### BREIF DESCRIPTION OF THE DRAWINGS

A further understanding of the nature and advantages of the present invention may be realized by reference to the remaining portions of the specification and the drawings. In the following, preferred embodiments of the invention is explained in more detail with reference to the drawings, wherein
Fig. 1 shows an embodiment of bicycle storage station,
Fig. 2 shows the steps of an embodiment of a method according to the invention,
Fig. 3 shows an embodiment of the locking features of a bicycle and bicycle stand, and
Fig. 4 shows a cross section of a bicycle stand, wherein the lock engages a locking bracket of a bicycle.

### DETAILED DESCRIPTION

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

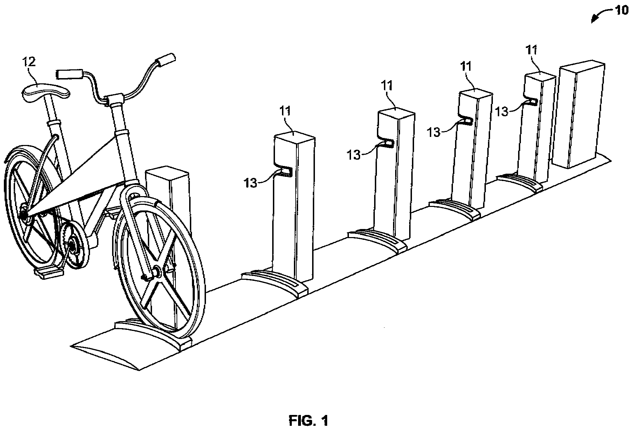

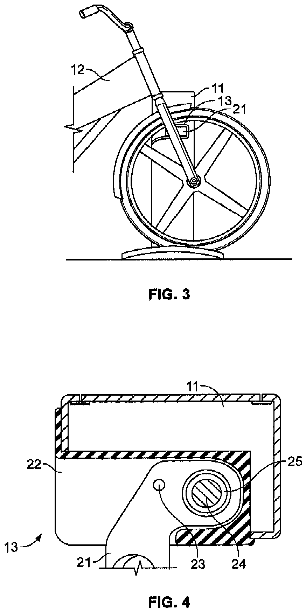

Fig. 1 shows a bicycle storage station 10, comprising a plurality of bicycle stands 11. In one of the bicycle stands 11 there is placed a bicycle 12. The bicycle 12 is locked to the bicycle stand 11. Each of the bicycle stands 11 is equipped with locking means 13 that are adapted to engage with cooperating locking means (see Fig. 3 and 4 for more details) on the bicycle 12 in order to lock the bicycle 12 to the bicycle stand 11.

A system according to an embodiment of the invention preferably comprises a plurality of bicycle storage stations 10, which are placed at or in the proximity of train, metro and bus stations.

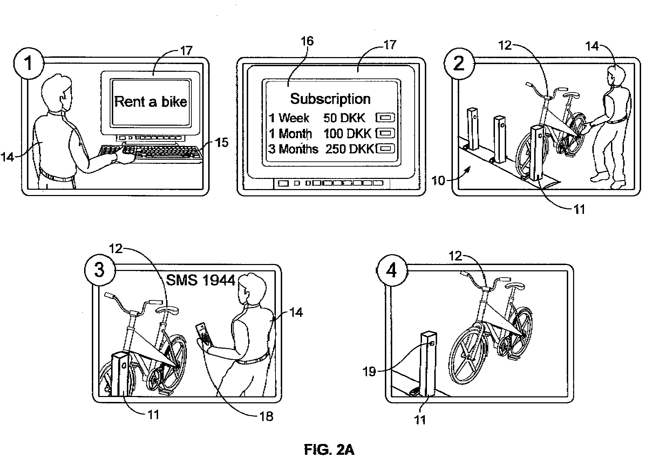

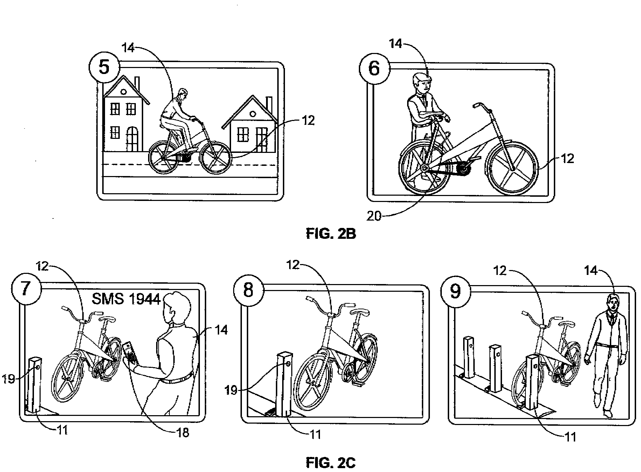

In Fig. 2 is shown the steps of a preferred embodiment of the inventive method. Step 1 shows a user 14 performing an online registration using a computer 15 which is connected to the internet. The user 14 accesses the webpage that enables him to register. In this web page is shown a window 16 on the computer monitor 17 displaying to the user 14 a plurality of subscription possibilities, e.g. a one-week subscription, a one-month subscription, or a three-month subscription. Also displayed are the prices for each subscription. When the user 14 has chosen the subscription he needs, means and options for online payment transactions are displayed on the computer monitor 17 for the user 14 to see. Then a bicycle stand identification tag is issued to the user. This can for example be done by displaying the tag, which is preferably a number, on the computer monitor 17. Preferably, however the user also needs to associate a mobile phone to the subscription by entering his mobile phone number during the registration. In step 2, the user 14 travels to the bicycle storage station 10 and locates the bicycle stand 11 (and the bicycle 12) having the issued identification tag.

In step 3, the user 14 unlocks the bicycle stand 11 by sending a SMS message which comprises the bicycle stand identification tag (which is preferably a number) to a particular phone number of a central computer (not shown) using his mobile phone 18. As illustrated, the phone number of the central computer could for example be 1944.

Then the central computer performs a user identification check, i.e. it makes a comparison of the mobile phone 18 and the identification tag used in the SMS message. Furthermore, the computer preferably also performs a payment check in order to make sure that the online payment transaction is valid, and/or whether the subscription has expired or not.

In step 4 the light diode 19 of the bicycle stand 11 is green, indicating that the bicycle stand 11 is unlocked and that the bicycle 12 may be removed from it. Preferably the bicycle stand 11 locks automatically after the bicycle 12 has been removed from it. Hereby is assured that the bicycle stand 11 is available to the user when he returns to the bicycle storage station 10.

In step 5 is shown that the user 14 uses the bicycle 12 for his transportation purpose. The bicycle storage station 10 is preferably placed at or in the proximity of a train, metro or bus station, and the transportation purpose of the user 14 could for example be to transport himself from this train, metro or bus station to his working place. In large cities the traffic can be so dense in certain hours of the day that it is a tremendous advantage to the user 14 to use a bicycle 12 instead of other means of transportation between the train, metro or bus station and his working place.

In step 6 the user 14 has arrived at his destination, for example his working place, where he may lock the bicycle 12 using a regular lock 20. This regular lock 20 could for example be a chain lock which he has brought with him and which is locked and unlocked by using a key. Hereby theft of the bicycle 12 at the destination may be precluded.

In step 7 is shown the situation wherein the user 14 has returned to the bicycle stand 11 after use of the bicycle 12. As indicated, the light diode 19 of the bicycle stand 11 emits a red light indicating that the bicycle stand 11 is locked. The user 14 then unlocks the bicycle stand 11 by sending a SMS message, comprising the bicycle stand identification tag, with his mobile phone 18.

In step 8 is shown that the light diode 19 of the bicycle stand 11 emits a green light, indicating that the user 14 can park the bicycle 12.

I n step 9 is shown that the bicycle 12 is locked to the bicycle stand 11, and the user 14 is leaving the bicycle storage station 10. The bicycle 12 or locking means (not shown) of the bicycle 12 are preferably equipped with a tag, preferably a so called radio frequency identification tag (RFID-tag), so that the individual bicycle stand 11 can recognize the individual bicycle 12 belonging to it.

Above is described an embodiment of the inventive method that is particularly useful for people who want to use the bicycle 12 as part of their transportation means when commuting between one destination (for example the home of the user 14) and another destination (for example the working place of the user 14) on a regular day by day basis, because the bicycle and bicycle stand will always be available to him during the subscription period.

It is understood that according to other embodiments, the user 14 may make use of more than one bicycle 12. For example, he may use a similar bicycle 12 in order to get from his home to a train, metro or bus station.

Fig. 3 shows a close up drawing of an embodiment of a bicycle stand 11 with a bicycle 12 (only shown partially) which is locked in the locking means 13 of the stand 11. The locking means 13 of the bicycle stand 11 comprises a recess into which a locking bracket 21 of the bicycle 12 is inserted.

Fig. 4 shows a cross section of a bicycle stand 11, wherein the locking means 13 is arranged. In a recess 22 of the locking means 13 a locking bracket 21 is placed. The illustrated locking bracket 21 is attached to a bicycle (not shown in order to increase the intelligibility of the figure). The bracket 21 is equipped with a RFID-tag 23, which can be read by corresponding reading means in the bicycle stand 11. Hereby the bicycle stand 11 can recognize the specific bicycle 12 belonging to or assigned to it. The bicycle 12 is locked to the bicycle stand 11 by an actuator 24, which engages a hole 25 in the bracket 21. This actuator 24 is only operable to engage the hole 25 in the bracket 21 if the identification check performed by reading the RFID-tag 23 confirms that it is the bracket 21 of the correct bicycle 12, which is inserted into the recess 22. Hereby is excluded that another bicycle 12 can be locked to that particular bicycle stand 11, whereby it is achieved that that particular bicycle stand 12 will be vacant, when the user returns his/her bicycle 12 after use.

### LIST OF REFERENCE NUMBERS

In the following is given a list of reference numbers that are used in the detailed description of the invention.
- 1-9: method steps
- 10: bicycle storage station
- 11: bicycle stand
- 12: bicycle
- 13: locking means of the bicycle stand
- 14: user
- 15: computer
- 16: window
- 17: computer monitor
- 18: mobile phone
- 19: light diode
- 20: regular bicycle lock
- 21: locking bracket on bicycle
- 22: recess in locking means of the bicycle stand
- 23: RFID-tag
- 24: actuator of the locking means of the bicycle stand
- 25: hole in the bracket for locking engagement with the actuator

## Claims

1. A bicycle rental system comprising:
a bicycle storage station (10) comprising a plurality of bicycle stands (11) for supporting and locking bicycles (12), each bicycle stand (11) comprising a lock (13) configured to open at the receipt of a command signal,
a portable communication device (18) configured for sending a control message representing a specific bicycle stand (11) of the plurality of bicycle stands (11) as well as representing said portable communication device (18) itself, and
a central computer comprising a registry with stored registration data representing said specific bicycle stand (11) and said portable communication device (18), the central computer being configured for:
receiving said control message,
comparing said control message with said stored registration data for identifying said portable communication device (18), and subsequently
sending a command signal to said specific bicycle stand (11) for unlocking said specific stand (11).

2. A bicycle rental system according with claim 1, wherein the registration data in the registry are obtained by an online internet based user (14) registration of a portable communication device (18) via a web page.

3. A bicycle rental system according to claim 2, wherein said webpage is configured for displaying a plurality of subscription possibilities and for subsequently providing secure means for performing an online monetary transaction in order to pay for a subscription.

4. A bicycle rental system according to claim 2 or 3, wherein the webpage is further configured for displaying the location of a plurality of bicycle storage stations (10) on a map, and the number of available bicycles (12) at the each bicycle storage station (10).

5. A bicycle rental system according to any of the claims 2 - 4, wherein the webpage is configured to display an identification tag identifying a specific vacant bicycle (12) and bicycle stand (11).

6. A bicycle rental system according to any of the preceding claims, wherein the portable communication device is a mobile phone (18), and wherein the control message is a short message service (SMS), which is sent via a mobile phone communication system.

7. A bicycle rental system according to any of the preceding claims, wherein the command signal is sent to the specific bicycle stand (11) via a mobile phone communication system.

8. A bicycle rental system according to any of the preceding claims, wherein the bicycle stand (11) comprises indicator means (19) for indicating whether it is locked or unlocked.

9. A bicycle rental system according to any of the preceding claims, wherein each bicycle stand (11) comprises means for automatically locking its lock subsequent to a removal of a bicycle (12) from it.

10. A bicycle rental system according to any of the preceding claims, wherein each bicycle (12) is furthermore equipped with a separate, coded lock (20), for locking the bicycle (12) at other locations than the bicycle stand (11) during use.

11. A bicycle rental system according to any of the preceding claims, wherein the portable communication device (18) is configured for sending the control message via a short range wireless protocol to the bicycle storage station, and wherein the bicycle storage station (10) comprises means configured for forwarding said control message to the central computer.

12. A bicycle rental system according to any of the preceding claims, wherein the lock (13) of the bicycle stand (11) comprises means (24) configured for engaging a corresponding locking bracket (21) of a bicycle (12) in order to lock said bicycle (12) to the bicycle stand (11).

13. A bicycle rental system according to claim 12, wherein each locking bracket (21) is equipped with a radio-frequency identification tag (23) readable by a bicycle stand (11), whereby each of the bicycle stands (11) is able to identify the particular bicycle (12) belonging to said bicycle stand (11).

14. A bicycle rental system according to any of the preceding claims, wherein the bicycle storage station (10) further comprises an advertising stand with a surface area adapted for receiving advertisements.

15. A method of using a bicycle rental system comprising a bicycle storage station (10) with a plurality of bicycle stands (11), the method comprising steps of:
- performing an online internet based user registration wherein a bicycle stand identification tag is issued,
- sending a text message, comprising the bicycle stand identification tag via a phone communication system to a central computer, where after the computer performs a user identification check, and sends a control signal to the bicycle stand (11) unlocking the bicycle stand (11) if the user identification check is approved,
- removing the bicycle (12) from the bicycle stand (11) for use,
- automatically locking the bicycle stand (11), after removal of the bicycle (12) from it,
- returning the bicycle (12) to the bicycle stand (11) after use,
- unlocking the bicycle stand (11),
- placing the bicycle (12) in the bicycle stand (11), and subsequently
- automatically locking the bicycle stand (11).
